# EUROPÄISCHE PATENTANMELDUNG

(11) **EP 2 090 999 A1**
(43) Veröffentlichungstag der Anmeldung: **19.08.2009**
(21) Anmeldenummer: 08151554.6
(22) Anmeldetag: 18.02.2008
(51) Int. Cl.: G06F 21/00

(54) **Speichermedium zur Verwendung mit einer Recheneinheit zur gesicherten Nutzung serverbasierter Anwendungen und Verfahren beziehungsweise System zum gesicherten Anbieten serverbasierter Anwendungen**

(71) Anmelder: PG Consulting Unternehmens- und DV- Organisations Beratung GmbH, 21279 Appel (DE)
(72) Erfinder: Pfenning, Dieter, 21279 Appel (DE)
(74) Vertreter: Raffay & Fleck

(57) **Zusammenfassung**

Die Erfindung betrifft ein Speichermedium, das so eingerichtet ist, dass bei Kombination mit einer geeigneten Recheneinheit mit Eingabe- und

Anzeigevorrichtung dem Benutzer eine Kommunikation mit mindestens einem Server ermöglicht wird. Die Erfindung betrifft des Weiteren ein Verfahren beziehungsweise ein System zum anbieten Serverbasierter Anwendungen.

Es ist es Aufgabe dieser Erfindung, die bekannten Lösungen der Art weiterzuentwickeln, dass dem Benutzer die Verwendung einer Recheneinheit unabhängig von der darauf installierten Software und unter Verwendung der mit der Recheneinheit verbundenen Infrastruktur ohne Konfiguration durch den Benutzer die Nutzung serverbasierter Anwendungen und die eindeutige Identifikation des Clients ermöglicht wird.

Dies wird erfindungsgemäß dadurch ein Speichermedium gelöst, dass so eingerichtet ist, dass es bei Kombination mit einer geeigneten Recheneinheit mit Eingabe- und Anzeigevorrichtung diese unter Rückgriff auf das auf dem Speichermedium abgelegte Betriebssystem betreibt und über mit der Recheneinheit verbundene Infrastruktur automatisch eine Verbindung zu mindestens einem Server aufbaut und dem Benutzer eine Kommunikation mit dem mindestens einen Server erlaubt, wobei das Speichermedium eine eindeutige Identifikation aufweist.

## Beschreibung

### Technisches Gebiet

Die Erfindung betrifft ein Speichermedium oder eine Kombination von Speichermedien, die so eingerichtet ist beziehungsweise sind, dass bei Kombination mit einer geeigneten Recheneinheit mit Eingabe- und Anzeigevorrichtung dem Benutzer über die Eingabe- und Anzeigevorrichtung eine, insbesondere bidirektionale, Kommunikation mit mindestens einem Server ermöglicht wird. Die Erfindung betrifft des Weiteren ein Verfahren beziehungsweise ein System zum Anbieten serverbasierter Anwendungen.

### Stand der Technik

Bekannt ist es, ein Betriebssystem von einem externen Speichermedium zu booten und so eine Recheneinheit eines Computers zu verwenden, ohne dabei auf ein möglicherweise auf der Festplatte dieses Computers installiertes Betriebssystem zurück zu greifen. Dies bietet die Möglichkeit, immer das eigene, auf einem tragbaren Speichermedium mitgeführte Betriebssystem zu verwenden und auf dem verwendeten Computer keine Spuren zu hinterlassen.

Auch ist es bekannt, serverbasierte Anwendungen über eine spezielle, meist verschlüsselte Verbindung zu verwenden. Dabei muss der Client sich meist durch die Eingabe eines Passwortes oder ein Zurverfügungstellen eines Zertifikates oder Schlüssels autorisieren. Ein solches Zertifikat beziehungsweise ein solcher Schlüssel kann teilweise oder ganz auf einem tragbaren Speichermedium hinterlegt sein.

Der Aufbau einer solchen Verbindung bedarf aber meist aufwendiger Konfigurationen, die durch den Benutzer durchgeführt werden müssen.

Auch sind die Clients nicht vor Veränderungen der auf Ihnen befindlichen Informationen, insbesondere der dort vorgesehenen Software geschützt. So können, insbesondere wenn der Client mit dem Internet verbunden ist, Viren den ordnungsgemäßen Betrieb des Clients stören, oder es können fehlerhafte Benutzerinteraktionen dazu führen, dass der Client nicht mehr wie vorgesehen einsetzbar ist.

### Darstellung der Erfindung

Somit ist es Aufgabe dieser Erfindung, ein Speichermedium anzugeben, das dem Benutzer die Verwendung einer Recheneinheit unabhängig von der darauf installierten Software erlaubt, und das unter Verwendung der mit der Recheneinheit verbundenen Infrastruktur ohne Konfiguration durch den Benutzer die Nutzung serverbasierter Anwendungen und die eindeutige Identifikation des Clients ermöglicht. Es ist ebenfalls Aufgabe der Erfindung, eine Vorrichtung beziehungsweise ein System anzugeben, die beziehungsweise das ein Anbieten von serverbasierten Anwendungen ohne Konfiguration durch den Benutzer an identifizierbare Clients ermöglicht.

Die Aufgabe wird gelöst durch ein Speichermedium beziehungsweise eine Kombination von Speichermedien gemäß Anspruch 1, ein Verfahren nach Anspruch 6 beziehungsweise ein System gemäß Anspruch 10. Die Ansprüche 2 bis 5, 7 bis 9 und 11 bis 13 geben vorteilhafte Weiterbildungen an.

Gemäß Anspruch 1 ist ein erfindungsgemäßes Speichermedium so eingerichtet, dass es bei Zusammenwirken mit einer geeigneten Recheneinheit, die über Eingabe- und Anzeigevorrichtung verfügt, über die mit der Recheneinheit verbundene Infrastruktur automatisch eine Verbindung zu mindestens einem Server aufbaut. Dabei ermöglicht es dem Benutzer über die Eingabe- und Anzeigevorrichtung eine Kommunikation mit dem Server. Des Weiteren weist das Speichermedium erfindungsgemäß eine eindeutige Identifikation auf. Unter dieser Identifikation ist keine aufgedruckte, sondern eine in dem Speichermedium gespeicherte Identifikation zu verstehen.

Ein solches Speichermedium kann mit einem Computer verbunden werden. Ist das BIOS des Computers so konfiguriert, dass es vom Speichermedium bootet, interagieren Recheneinheit und Speichermedium und starten das auf dem Speichermedium hinterlegte Betriebssystem und gegebenenfalls hinterlegte Anwendungen. Unter Betriebssystem ist dabei nicht zwangsläufig ein normales Betriebssystem zu verstehen, dass es dem Anwender erlaubt, weitere Anwendungen zu installieren, zu starten und/oder andere Veränderungen durchzuführen. Vielmehr ist es nur erforderlich, dass das Betriebssystem zumindest die Interaktion der vorgesehenen Anwendungen, die sich beispielsweise auch auf einen Browser beschränken können, und der Hardware der Recheneinheit ermöglicht. Der Funktionsumfang des auf dem Speichermedium aufgebrachten Betriebssystems kann somit je Zielsetzung stark variieren.

Es ist aber auch denkbar, das auf dem Speichermedium hinterlegte Betriebssystem durch ein beispielsweise ebenfalls auf dem Speichermedium hinterlegtes Programm aus einem ursprünglich gebooteten Betriebssystem heraus zu starten und von da an auf das ursprüngliche Betriebssystem für die Dauer der Verwendung der erfindungsgemäßen Vorrichtung nicht weiter zurück zu greifen. Darunter ist ausdrücklich nicht das gleichzeitige Betreiben mehrerer Betriebssysteme auf einem Rechner, beispielsweise unter Verwendung virtueller Maschinen, zu verstehen, sondern das automatische Entladen des ursprünglichen Betriebssystems und anschließendes Booten des auf dem oder den Speichermedien hinterlegten Betriebssystems. Dadurch wir dem Benutzer das Neustarten des Computers erspart. Auch kann der Fachmann Vorkehrungen treffen, dass nach dem Verwenden der erfindungsgemäßen Vorrichtung das ursprünglich laufende Betriebssystem wieder, insbesondere im vor der Verwendung der erfindungsgemäßen Vorrichtung befindlichen Zustand, hergestellt wird.

Beim Booten des auf dem Speichermedium hinterlegten Betriebssystems wird somit nicht auf die im Computer vorhandenen Festspeicher oder Software zurückgegriffen. Vielmehr wirken nur Speichermedium beziehungsweise darauf hinterlegte Software und Recheinheit und mit ihr verbundene Ein- und Ausgabevorrichtungen zusammen.

Dabei ist unter Recheinheit insbesondere die zentrale Recheneinheit (CPU) zu verstehen. Im Sinne dieser Schrift fallen darunter aber auch Busleitungen, Schnittstellen, Zwischenspeicher, Befehlssatz der Zentralenrecheneinheit und ähnliche zur Nutzung der zentralen Recheneinheit zu verwendenden Teile des Computers.

Wirken Recheneinheit und Speichermedium derart zusammen, stellt das Speichermedium automatisch eine Verbindung mit mindestens einem Server her. Dabei nutzt es die mit der Recheneinheit verbundene Infrastruktur. Der Aufbau einer Verbindung ist nur bei geeigneter Infrastruktur möglich. Ist diese nicht gegeben, können lediglich lokal auf dem Speichermedium hinterlegte Anwendungen genutzt werden.

Das erfindungsgemäße Speichermedium verbindet sich, nachdem es der Benutzer mit der Recheneinheit verbunden und diese eingeschaltet hat, für den Benutzer vollautomatisch mit dem mindestens einen Server.

Die Verbindung kann dabei verschlüsselt sein. Zur Verschlüsselung können auf dem oder den Speichermedien hinterlegte Informationen, wie Schlüssel, verwendet werden. Bei der Verwendung vorhandener Infrastruktur kann so sichergestellt werden, dass die übertragenen Informationen vor der Manipulation oder dem Mitlesen geschützt sind. Daher wird der Fachmann zumindest bei der Verwendung von ungesicherten Kommunikationswegen in der Regel eine Verschlüsselung vorsehen.

Die Verbindung kann unidirektional, beispielsweise zum Abruf oder Übertragen von Informationen, oder bidirektional sein.

Auch ist es möglich, dass Speichermedium so einzurichten, dass lediglich die vorgesehenen automatischen Verbindungen hergestellt werden und keine weiteren Verbindungen möglich sind. Dies kann beispielsweise durch den Einsatz einer Firewall und/oder das Deaktivieren weiterer Kommunikationsvorrichtungen, wie weiteren Modems, geschehen. Ein solches Absichern gegen weitere Verbindungen ist eine weitere Sicherheitsmaßnahme zum Schutz vor Manipulation oder Zugriffen durch Dritte.

Das Speichermedium ist erfindungsgemäß durch die aufgebrachte Identifikation identifizierbar. Dies ermöglicht es beispielsweise, benutzerspezifische Anwendungen, Ansichten und/oder Daten anzubieten oder eine Abrechnung durchzuführen. Als Identifizierung kann dabei beispielsweise ein Schlüssel oder Zertifikat dienen.

Es ist jedoch für die Realisierung der Erfindung nicht nötig, dass lediglich ein Speichermedium verwendet wird. Vielmehr kann es vorteilhaft sein, eine Kombination von Speichermedien mit entsprechender Verbindung zwischen diesen vorzusehen. Dies ermöglicht es, einen Teil der Speichermedien in Serienproduktion identisch herzustellen und die individuelle Identifikation auf einem weiteren, gegebenenfalls kleineren, Speichermedium aufzubringen, das beispielsweise über eine Lesegerät mit dem ersten Speichermedium oder den ersten Speichermedien verbunden ist und zusammen mit diesem beziehungsweise diesen die erfindungsgemäße Kombination von Speichermedien bildet.

So kann beispielsweise eine SIM-Karte zum Einsatz kommen, die beispielsweise mit einem USB-Stick mit einem entsprechenden Lesegerät kombiniert wird. Als Identifikation kann dann die auf der SIM-Karte aufgebrachte ID verwendet werden, was den Vorteil mit sich bringt, dass es sich dabei um eine komplett geschlossene Speicherung handelt, deren Sicherheitsvorkehrungen nicht umgangen werden können. So kann gegenüber der Verwendung von beispielsweise Zertifikaten eine weitere Verbesserung der Sicherheit erreicht werden.

Besonders vorteilhaft ist es gemäß Anspruch 2, zum Aufbau der Verbindung das Internet zu verwenden. Dies ermöglicht den einfachen Einssatz an vielen Recheneinheiten, da sehr viele Recheneinheiten über eine Infrastruktur verfügen, die eine Verbindung zum Internet ermöglicht.

Zum Schutz vor Veränderungen und Eingriffen durch Dritte ist es vorteilhaft, gemäß Anspruch 3 zumindest einen Teil der auf dem Speichermedium beziehungsweise den Speichermedien befindlichen Daten schreibgeschützt aufzubringen. Ein solcher Schreibschutz kann zwar auch softwaremäßig realisiert werden, ist aber besonders sicher, wenn das Speichermedium hardwaremäßig so eingerichtet ist, dass eine Veränderung der Daten bei ordnungsgemäßer Verwendung physikalisch nicht möglich ist.

Es ist sowohl möglich, den gesamten Speicherplatz physikalisch mit einem Schreibschutz zu versehen, als auch nur Teile zu schützen oder verschiedene Speicherplatzbereiche durch unterschiedliche Maßnahmen zu schützen. Einen sehr guten Schutz bieten hier insbesondere SIM-Karten, deren ID nur durch die Identifikationssoftware les- und beschreibbar ist. In diesem Fall trägt auch der Leseschutz zur weiteren Verbesserung der Sicherheit bei, da es so Unbefugten nicht möglich ist, die ID auszulesen und zu verwenden. Ein Leseschutz kann aber auch ohne den Einsatz von SIM-Karten vorgesehen werden.

Wird jedoch der gesamte Speicherplatz physikalisch schreibgeschützt, ist es dem Benutzer nicht möglich, Daten auf dem Speichermedium abzulegen. Auch kann eine erkannte Konfiguration einer benutzten Recheneinheit nicht gespeichert werden, was eine erneute Hardwareerkennung bei jedem Start nötig macht. Eine solche, vollständig schreibgeschützte Einrichtung bietet jedoch die größte Sicherheit. Je nach Anwendung kann es insbesondere wünschenswert sein, die Identifikation physikalisch schreibgeschützt aufzubringen.

Vorteilhafterweise kann, wenn es die Sicherheitsanforderungen zulassen, gemäß Anspruch 4 beschreibbarer Speicherplatz zur Speicherung von benutzereigenen und/oder recheneinheitspezifischen Daten vorgesehen werden. Dadurch wird es möglich, Daten auch auf dem Speichermedium und nicht nur auf einem Server zu hinterlegen beziehungsweise die Dauer des erneuten Bootvorgangs an der gleichen Recheneinheit zu verkürzen.

Bevorzugt wird das Speichermedium beziehungsweise die Kombination von Speichermedien gemäß Anspruch 5 so eingerichtet, dass dem Benutzer ein Browser zu Verfügung gestellt wird. Dann ist es möglich, serverbasierte Anwendungen, die eine Webschnittstelle aufeisen zu verwenden und/oder über einen Proxy oder direkt beispielsweise im Internet zu surfen.

Besonders vorteilhaft kann es auch sein, wenn dem Benutzer nur ein Browser und keine andere Anwendung zur Verfügung gestellt wird. Dadurch können ein besonders sicherer und störungsunanfälliger Betrieb gewährleistet und eine besonders einfache Benutzung erreicht werden.

Gemäß Anspruch 6 verwendet ein erfindungsgemäßes Verfahren zum Anbieten von serverbasierten Anwendungen zumindest einen Client, der ein Speichermedium oder eine Kombination von mindestens zwei Speichermedien nach einem der Ansprüche 1 bis 5 beinhaltet. Dabei erfolgt die Kommunikation zwischen Server und Client über die durch das mit einer geeigneten Recheneinheit zusammenwirkende Speichermedium hergestellte Verbindung. Der Client wird erfindungsgemäß durch die Identifikation des Speichermediums beziehungsweise je nach Anwendung durch die Kombination mehrerer Speichermedien eindeutig identifiziert.

Vorteilhafterweise ist gemäß Anspruch 7 auf mindestens einem Server zumindest eine Datenbank vorgesehen, in der Informationen zu den einzelnen mit Identifikationen versehenen Speichermedien hinterlegt sind. So ist es möglich, unter Verwendung der Identifizierung eines Clients der Datenbank weitere, dem die Identifizierung tragenden Speichermedium zugeordnete Daten zu entnehmen. Dabei kann es sich bei den Daten um einmalig erhobene Daten, wie persönliche Daten des Eigentümers, die beim Kauf erhoben werden, oder um während des Zugriffs auf mindestens einen Server dynamisch gewonnene Daten oder Kombinationen daraus handeln. So ist es beispielsweise möglich, benutzerspezifische Anwendungen, Oberflächen oder Daten anzubieten, deren Auswahl auch auf dessen vergangenen Verhalten bei der Verwendung der serverbasierten Anwendungen basieren kann, oder Abrechnungen durchzuführen.

Besonders vorteilhaft ist es, die serverbasierten Anwendungen gemäß Anspruch 8 mit einer Webschnittstelle auszurüsten. Dies ermöglicht die Durchführung des Verfahrens mit besonders wenig clientseitigem Aufwand. Insbesondere können Veränderungen der Anwendungen einfach serverseitig umgesetzt werden.

Vorteilhafterweise beinhalten die serverbasierten Anwendungen gemäß Anspruch 9 eine Emailanwendung und/oder einen insbesondere gesicherten Proxyserver. Der Einsatz einer Emailanwendung in einem erfindungsgemäßen Verfahren nutzt die Vorteile des Verfahrens besonders stark. Denn gerade durch Emails wird häufig Schaden verursachende Software verbreitet. Auch kann durch Beschränkung der für den Empfang von Emails zulässigen Absender insbesondere bei Beschränkung auf erfindungsgemäß identifizierte Absender, das Verbreiten von Spam-Emails und Viren oder ähnlichem grundsätzlich verhindert. Auch für den Einsatz eines Proxyservers eignet sich das erfindungsgemäße Verfahren besonders, da ein sicheres Surfen von zahlreichen Internetbenutzern gewünscht wird.

Ein erfindungsgemäßes System zum Anbieten von serverbasierten Anwendungen beinhaltet nach Anspruch 10 mindestens einen Server und mindestens ein Speichermedium und/oder mindestens eine Kombination von mindestens zwei Speichermedien nach einem der Ansprüche 1 bis 5.

Ein solches System ermöglicht ein besonders sicheres und clientseitig sehr einfach zu benutzendes Anbieten von Anwendungen.

Vorteilhafterweise ist gemäß Anspruch 11 auf mindestens einem Server zumindest eine Datenbank vorgesehen, in der Informationen zu den einzelnen mit Identifikationen versehenen Speichermedien hinterlegt sind.

Besonders vorteilhaft ist es, die serverbasierten Anwendungen gemäß Anspruch 12 mit einer Webschnittstelle auszurüsten.

Vorteilhafterweise beinhalten die serverbasierten Anwendungen gemäß Anspruch 13 eine Emailanwendung und/oder einen insbesondere gesicherten Proxyserver. Der Einsatz einer Emailanwendung und/oder eines insbesondere gesicherten Proxyservers in einem erfindungsgemäßen System nutzt die Vorteile der Erfindung besonders stark.

### Weg(e) zur Ausführung der Erfindung

Weitere Vorteile und Merkmale der Erfindung ergeben sich aus der nachfolgenden Beschreibung eines Ausführungsbeispiels, auf das die Erfindung jedoch keineswegs beschränkt ist:

In der gewählten Ausführungsform ist eine Kombination von zwei Speichermedien gewählt. Diese Kombination beinhaltet einen USB-Speicher-Stick, also ein Speichermedium mit USB-Anschluss. Dieser erste Speicher ist physikalisch so eingerichtet, dass von ihm über den USB-Anschluss ausschließlich gelesen werden kann. Ein Bebeziehungsweise Überschreiben ist nicht möglich. An diesen ersten Speicher ist ein Kartenleser für Smartcards angeschlossen, in den eine ebenfalls nicht beschreibbare Smartcard eingesetzt ist. Diese Smartcard bildet den zweiten Speicher.

Der erste Speicher trägt das Betriebssystem und andere Programme, in diesem Ausführungsbeispiel ausschließlich einen Browser. Der zweite Speicher trägt einen Identifikationsschlüssel.

Vor dem Starten eines Computers muss der USB-Speicher-Stick mit Smartcardlesegerät und eingesetzter Smartcard an einen freien USB-Anschluss des Computers angeschlossen werden. Nach dem Einschalten des Computers startet der Computer bei entsprechender Einstellung der Startsequenz im BIOS automatisch vom USB-Speicher-Stick. Dies führt dazu, dass auf keine Daten auf angeschlossenen Festspeichermedien wie Festplatten oder ähnliches zugegriffen wird. Der Computer wird mit einer auf dem ersten Speicher hinterlegten, sehr kleinen Linux-Distribution gestartet.

Dadurch, dass keine Daten auf die verwendeten Speichermedien geschrieben werden können, muss die Hardware-Konfiguration des verwendeten Computers bei jedem Starten neu analysiert werden. Dies ist notwendig, damit die richtigen Treiber für die tatsächlich vorhandene Hardware-Infrastruktur verwendet werden. Beispielsweise können entsprechende Linux-Distribution eingesetzt werden. Solche sind auch mit sehr geringen Speicherplatzanforderungen verfügbar. Werden relativ kleinen Betriebssystemvariante verwendet, ergibt sich, dass das System nur auf einer Auswahl bestimmter Hardwarekonfigurationen zum Einsatz kommen kann. Dem Fachmann ist aber klar, dass dies durch Verwendung einer entsprechend umfangreicheren Distribution oder anderer Betriebssystem bei Einsatz größerer Speichermedien vermieden werden kann.

Um bei wiederholtem Starten des Systems schneller starten zu können, ist es auch denkbar, Konfigurationsdaten der Hardware in einem beschreibbaren Bereich eines Speichermediums abzulegen. Dies macht die Lösung allerdings anfällig gegen Schadsoftware, weshalb hiervon in diesem Ausführungsbeispiel abgesehen wurde.

Beim Starten stellt das Betriebssystem automatisch eine Verbindung zum Internet her. In dem hier beschriebenen Ausführungsbeispiel wird dazu eine Infrastruktur benötigt, die in einem lokalen Netzwerk über einen DHCP-Server die notwendigen Netzwerkinformation bereitstellt. Dies bedeutet, dass eine solche Infrastruktur Voraussetzung für das Funktionieren aller weiteren vom Netzwerk abhängigen Funktionen ist. Es ist jedoch auch denkbar, Vorkehrungen zu treffen, in anderen Infrastrukturen eine Verbindung aufbauen zu können. So können beispielsweise Modemtreiber und entsprechende Einwahlinformationen bereitgehalten oder vom Nutzer erfragt werden. Durch die inzwischen hohe Verbreitung von DSL-Routern, die in der Regel einen DHCP-Server beinhalten, ist die von dem hier beschriebenen Ausführungsbeispiel geforderte Infrastruktur bei einer Vielzahl von Anwendern gegeben.

Nach dem erfolgreichen Starten des Computers wird der verschlüsselt abgespeicherte eindeutige Identifikationsschlüssel von der Smartcard ausgelesen und verschlüsselt über die Verbindung an einen voreingestellten nicht veränderbaren für alle Anwender zentralen Autorisierungs-Server gesendet.

Durch den Abgleich mit auf dem Server hinterlegten Daten wird der Anwender automatisch angemeldet. Lediglich ein in diesem Ausführungsbeispiel vierstelliger Zahlencode zum Schutz vor Missbrauch bei z.B. gestohlenen USB-Sticks muss eingegeben werden. Darauf kann aber zu Lasten der Sicherheit auch verzichtet werden, aber auch andere Authentifizierungen, wie das Erfassen biometrischer Daten, sind denkbar.

Bei dem hier beschriebenen Ausführungsbeispiel sind in einer serverseitigen Datenbank mit der Identifikation verbundene Informationen über den Inhaber der Smartcard hinterlegt.

Bei der Ausgabe (z.B. einem Verkauf) der Smartcards wird dafür die Identität des Nutzers (Inhabers) festgestellt. Die Ausgabestelle ist mit dem zentralen Autorisierungs-Server verbunden. Durch die Eingabe eines auf der Smartcard sichtbar aufgedruckten Zahlenschlüssels wird der Datensatz für diese eine Smartcard aufgerufen und mit den Personendaten verknüpft. Für die Nutzung der serverbasierten Anwendungen kann nach einem mit dieser Erfindung umzusetzenden Geschäftsmodell ein Entgelt erhoben werden. Dabei wird das Kundenkonto je nach Bezahlung frei geschaltet. Auch diese Information wird serverseitig in einer Datenbank hinterlegt. Ab diesem Zeitpunkt kann der Anwender die Anwendungen unter Verwendung des USB-Speicher-Sticks mit Smartcardlesegerät mit seiner Smartcard nutzen. Dem Server ist es dabei möglich, den Nutzer, von dem angenommen wird, dass er auch der Inhaber ist, eindeutig zu ermitteln. Zur Sicherstellung, dass nur der rechtmäßige Inhaber Zugang zu den serverbasierten Anwendungen beziehungsweise überhaupt zum vom ersten Speicher gebooteten Betriebssystem erhält ist das Abfragen einer Autorisierung vorgesehen.

Durch die nach dem Starten hergestellte Verbindung zum Server können nun verschiedene Dienste zur Verfügung gestellt werden. Auf den Client-Computern läuft in diesem Ausführungsbeispiel lediglich ein Internet-Browser, der die Ausgabe der Programme, die auf dem zentralen Server laufen auf dem Bildschirm des Client-Computers anzeigt und die Eingaben des Benutzers an den Server weiterleitet.

Da die Anmeldung automatisch auf einen fest eingestellten Server erfolgt, kann die gesamte Kommunikation ohne weitere Konfiguration verschlüsselt und personalisiert erfolgen.

Als Dienste werden in diesem Ausführungsbeispiel ein Email und ein Proxydienst angeboten. Durch die Identifikation des Benutzers ist es dabei beispielsweise möglich, nur explizit eingetragenen Benutzern das Senden von Emails an die individuelle Emailadresse zu erlauben (sogenannte whitelist). Bei Emails von Benutzern des erfindungsgemäßen Systems ist sogar die eindeutige Feststellung des Absenders möglich.

Durch die aufgezeigte Lösung ergibt sich darüber hinaus allein auf Anwendungsebene eine Vielzahl weiterer Vorteile:

Die gesamte Kommunikation läuft im Gegensatz zu den heutigen industriellen Standard Email-Lösungen verschlüsselt ab, und dies ohne eine einzige Einstellung durch die Benutzer.

Sollte es zu Missbrauch kommen, sind die Absender bei Verwendung einer erfindungsgemäßen Lösung eindeutig bestimmbar. Alleine hierdurch wird sich ein Missbrauch, z.B. durch vorsätzlich verbreitete Spam-Emails oder vorsätzlich in Umlauf gebrachten Viren, in dem so geschaffenen Email-System auf natürliche Weise reduzieren.

Durch den Proxydienst wird das sichere Navigieren im Internet ermöglicht. Viele Anwender sind durch Meldungen in den Medien verunsichert, inwieweit sie sich überhaupt noch ohne Angst vor Viren, Würmern, Trojanern bzw. ähnlicher Schadsoftware oder vor gefälschten Internetseiten im Internet bewegen können. Hier bietet das sichere Navigieren durch einen http-Proxy hindurch einen sehr hohen Sicherheitsstandard.

Auch ist es möglich, ohne Verwendung eines http-Proxys, das Aufrufen nur in einer Liste eingetragener Internetadressen zu gestatten. Alle in der Liste freigegebenen Internetadressen können regelmäßig vollständig auf Viren, Kindersicherheit und ähnliches sowie der Echtheit des Inhalteanbieters (Zertifikate) überprüft werden.

Aber auch auf Systemebene ergeben sich durch die aufgezeigte Lösung weitere Vorteile:

So ist das Betriebssystem vor Veränderungen beispielsweise durch Installationen, Viren, und/oder Fehlkonfigurationen geschützt. Schadhafte Programme wie Viren können sich maximal während der Arbeit im Arbeitsspeicher einnisten. Das System wird immer erfolgreich starten und nach einem Neustart des Systems sind alle Schadprogramme eliminiert.

## Patentansprüche

1. Speichermedium oder Kombination von mindestens zwei Speichermedien, das beziehungsweise die ein Betriebssystem zum softwaremäßigen Betreiben einer Recheneinheit enthält und so eingerichtet ist beziehungsweise sind, dass es beziehungsweise sie bei Kombination mit einer geeigneten Recheneinheit mit Eingabe- und Anzeigevorrichtung diese unter Rückgriff auf das auf dem Speichermedium abgelegte Betriebssystem betreibt und über eine mit der Recheneinheit verbundene Infrastruktur automatisch eine, insbesondere verschlüsselte, Verbindung zu mindestens einem Server aufbaut, insbesondere keine weiteren Verbindungen zulässt, und dem Benutzer über die Eingabe- und Anzeigevorrichtung eine, insbesondere bidirektionale, Kommunikation mit dem mindestens einen Server erlaubt, wobei das Speichermedium beziehungsweise mindestens eins der kombinierten Speichermedien eine eindeutig Identifikation aufweist.

2. Speichermedium oder Kombination von mindestens zwei Speichermedien nach Anspruch 1, **dadurch gekennzeichnet, dass** die Verbindung über das Internet aufgebaut wird.

3. Speichermedium oder Kombination von mindestens zwei Speichermedien nach einem der vorherigen Ansprüche, **dadurch gekennzeichnet, dass** zumindest ein Teil der auf dem Speichermedium beziehungsweise den Speichermedien befindlichen Daten, der Art aufgebracht ist, dass er nicht verändert werden kann.

4. Speichermedium oder Kombination von mindestens zwei Speichermedien nach einem der vorherigen Ansprüche, **dadurch gekennzeichnet, dass** Speicherplatz zum Hinterlegen von benutzereigenen und/oder recheneinheitspezifischen Daten vorgesehen ist.

5. Speichermedium oder Kombination von mindestens zwei Speichermedien nach einem der vorherigen Ansprüche, **dadurch gekennzeichnet, dass** es beziehungsweise sie so eingerichtet ist beziehungsweise sind, dass sie dem Benutzer einen Browser, insbesondere nur einen Browser, zur Verfügung stellen.

6. Verfahren zum Anbieten von serverbasierten Anwendungen, insbesondere über das Internet, wobei zumindest ein Client auf ein Speichermedium oder eine Kombination von mindestens zwei Speichermedien nach einem der Ansprüche 1 bis 5 zugreift und die Kommunikation zwischen Server und Client über die durch das mit einer geeigneten Recheneinheit zusammenwirkenden Speichermedium hergestellte, insbesondere verschlüsselte, Verbindung erfolgt und der Client durch die auf dem Speichermedium beziehungsweise mindestens einem der mindestens zwei Speichermedien aufgebrachten Identifikation eindeutig identifiziert wird.

7. Verfahren zum Anbieten von serverbasierten Anwendungen nach Anspruch 6, **dadurch gekennzeichnet, dass** zumindest auf einem Server zumindest eine Datenbank vorgesehen ist, der unter Verwendung der Identifizierung eines Clients weitere dem die Identifizierung tragenden Speichermedium zugeordnete Daten entnommen werden können.

8. Verfahren zum Anbieten von serverbasierten Anwendungen nach einem der Ansprüche 6 bis 7, **dadurch gekennzeichnet, dass** die serverbasierten Anwendungen über eine Webschnittstelle verfügen.

9. Verfahren zum Anbieten von serverbasierten Anwendungen nach einem der Ansprüche 6 bis 8, **dadurch gekennzeichnet, dass** die serverbasierten Anwendungen eine Emailanwendung und/oder einen insbesondere gesicherten Proxyserver beinhalten.

10. System zum Anbieten von serverbasierten Anwendungen beinhaltend mindestens einen Server und mindestens ein Speichermedium und/oder mindestens eine Kombination von mindestens zwei Speichermedien nach einem der Ansprüche 1 bis 5.

11. System nach Anspruch 10, **dadurch gekennzeichnet, dass** zumindest auf einem Server zumindest eine Datenbank vorgesehen ist, der unter Verwendung der Identifizierung eines Clients weitere dem die Identifizierung tragenden Speichermedium zugeordnete Daten entnommen werden können.

12. System nach Anspruch 10 oder 11, **dadurch gekennzeichnet, dass** die serverbasierten Anwendungen über eine Webschnittstelle verfügen.

13. System nach einem der Ansprüche 10 bis 12, **dadurch gekennzeichnet, dass** die serverbasierten Anwendungen eine Emailanwendung und/oder einen insbesondere gesicherten Proxyserver beinhalten.
